# EUROPEAN PATENT APPLICATION

(11) **EP 4 455 104 A1**
(43) Date of publication of application: **30.10.2024**
(21) Application number: 22910918.6
(22) Date of filing: 08.12.2022
(51) Int. Cl.: C03C 17/32, B32B 17/10, C03C 17/34, F24C 15/10, H05B 6/12

(54) **COOKER TOP PLATE**

(30) Priority: 22.12.2021 JP 2021207956; 28.04.2022 JP 2022074717
(71) Applicant: Nippon Electric Glass Co., Ltd., Otsu-shi, Shiga 520-8639 (JP)
(72) Inventor: YAMAMOTO, Takefumi, Otsu-shi, Shiga 520-8639 (JP)
(74) Representative: Tetzner, Michael
(86) International application number: PCT/JP2022/045253
(87) International publication number: WO 2023/120207

(57) **Abstract**

Provided is a cooker top plate capable of increasing both the scratch resistance and the adhesion of the heat-resistant resin layer. A cooker top plate includes: a glass substrate having a cooking surface on which a cooking utensil is to be put and a back surface opposite to the cooking surface; and a heat-resistant resin layer disposed on the back surface of the glass substrate, wherein the heat-resistant resin layer includes a layer (X) containing a silicone resin and a pigment, the pigment in the layer (X) contains a flaky pigment (A) having a Mohs hardness of 2.5 or more and a needle-like crystalline pigment (B) having a Mohs hardness of 2.5 or more, a total content of the flaky pigment (A) and the needle-like crystalline pigment (B) per 100% by mass of pigment in the layer (X) is 85% by mass or more, and a mass ratio of the content of the flaky pigment (A) to the content of the needle-like crystalline pigment (B) in the layer (X) (content of flaky pigment (A) to content of needle-like crystalline pigment (B)) is not less than 1.0 and not more than 35.0.

## Description

### [Technical Field]

The present invention relates to cooker top plates.

### [Background Art]

A cooker top plate is provided on the top of an electromagnetic cooker, a radiant heater cooker, a gas cooker or other types of cookers. The cooker top plate includes a glass substrate having: a cooking surface on which a cooking utensil is to be put; and a back surface opposite to the cooking surface. Furthermore, a heat-resistant resin layer containing silicone resin is provided on the back surface of the glass substrate for the purposes of hiding the internal structure of the cooker and increasing the heat resistance.

For example, Patent Literature 1 below discloses a cooker top plate which includes a glass plate and a heat-resistant resin layer provided in contact with the back surface of the glass plate and in which the heat-resistant resin layer contains a heat-resistant resin and a flaky aluminum-based filler.

Furthermore, Patent Literature 2 below discloses a cooker top plate which includes a glass plate and a heat-resistant resin layer provided in contact with the back surface of the glass plate and in which the heat-resistant resin layer contains a heat-resistant resin and a flaky inorganic filler having a Mohs hardness of 3 or more.

### [Citation List]

### [Patent Literature]

[PTL 1]
   WO 2020/130064
[PTL 2]
   JP-A-2020-094799

### [Summary of Invention]

### [Technical Problem]

In assembling a cooker, a heat-resistant resin layer of a cooker top plate may get scuffs and scratches thereon, for example, because of contact of the heat-resistant resin layer with surrounding parts. Therefore, the heat-resistant resin layer is required to have high scratch resistance.

In the cooker top plates described in Patent Literatures 1 and 2, since the heat-resistant resin layers contain a specific filler (pigment), their scratch resistance can be increased to some extent. However, the scratch resistance of the heat-resistant resin layer is preferably as high as possible.

In order to increase the scratch resistance of the heat-resistant resin layer, it is conceivable to increase the content of pigment in the heat-resistant resin layer to increase the hardness of the heat-resistant resin layer. However, if the content of pigment in the heat-resistant resin layer is simply increased, the content of resin component in the heat-resistant resin layer becomes relatively small, which may result in decreased adhesion of the heat-resistant resin layer, such as the occurrence of delamination between the heat-resistant resin layer and the glass substrate or the occurrence of superficial peeling of the heat-resistant resin layer.

Therefore, it is difficult that the conventional cooker top plates increase both the scratch resistance of the heat-resistant resin layer and the adhesion of the heat-resistant resin layer.

An object of the present invention is to provide a cooker top plate capable of increasing both the scratch resistance and the adhesion of the heat-resistant resin layer.

### [Solution to Problem]

A cooker top plate according to the present invention includes: a glass substrate having a cooking surface on which a cooking utensil is to be put and a back surface opposite to the cooking surface; and a heat-resistant resin layer disposed on the back surface of the glass substrate, wherein the heat-resistant resin layer includes a layer (X) containing a silicone resin and a pigment, the pigment in the layer (X) contains a flaky pigment (A) having a Mohs hardness of 2.5 or more and a needle-like crystalline pigment (B) having a Mohs hardness of 2.5 or more, a total content of the flaky pigment (A) and the needle-like crystalline pigment (B) per 100% by mass of pigment in the layer (X) is 85% by mass or more, and a mass ratio of the content of the flaky pigment (A) to the content of the needle-like crystalline pigment (B) in the layer (X) (content of flaky pigment (A) to content of needle-like crystalline pigment (B)) is not less than 1.0 and not more than 35.0.

In the cooker top plate according to the present invention, the flaky pigment (A) in the layer (X) preferably contains at least one of a metallic pigment (A1) and an extender pigment (A2) different from the metallic pigment.

In the cooker top plate according to the present invention, the metallic pigment (A1) in the layer (X) preferably contains at least one of aluminum and an aluminum compound.

In the cooker top plate according to the present invention, a content of the metallic pigment (A1) per 100% by mass of the layer (X) is preferably not less than 10% by mass and not more than 55% by mass.

In the cooker top plate according to the present invention, the extender pigment (A2) in the layer (X) preferably contains mica.

In the cooker top plate according to the present invention, the needle-like crystalline pigment (B) in the layer (X) preferably contains at least one selected from the group consisting of potassium titanate, calcium silicate, and titanium oxide.

In the cooker top plate according to the present invention, the needle-like crystalline pigment (B) in the layer (X) preferably contains potassium titanate.

In the cooker top plate according to the present invention, the heat-resistant resin layer preferably has a single-layer structure formed only of the layer (X).

In the cooker top plate according to the present invention, the heat-resistant resin layer preferably has a structure formed of two or more layers.

In the cooker top plate according to the present invention, a surface layer of the heat-resistant resin layer located on a side thereof opposite to the glass substrate side is preferably the layer (X).

### [Advantageous Effects of Invention]

The present invention enables provision of a cooker top plate capable of increasing both the scratch resistance and the adhesion of the heat-resistant resin layer.

### [Brief Description of Drawings]

[Fig. 1]

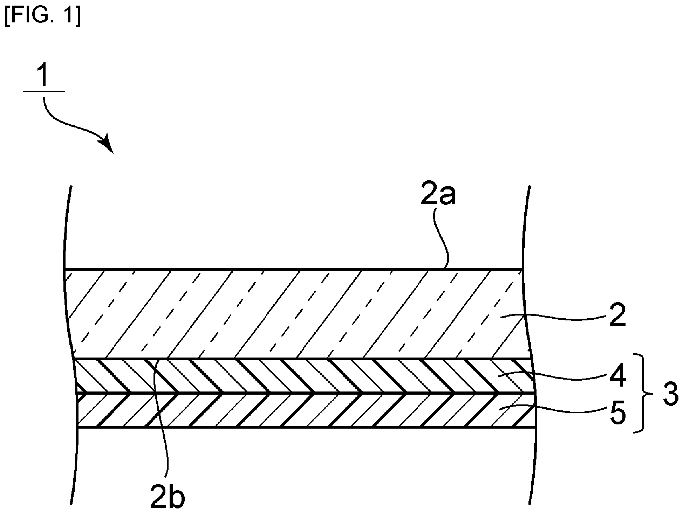

   Fig. 1 is a schematic cross-sectional view showing a cooker top plate according to a first embodiment of the present invention.
[Fig. 2]

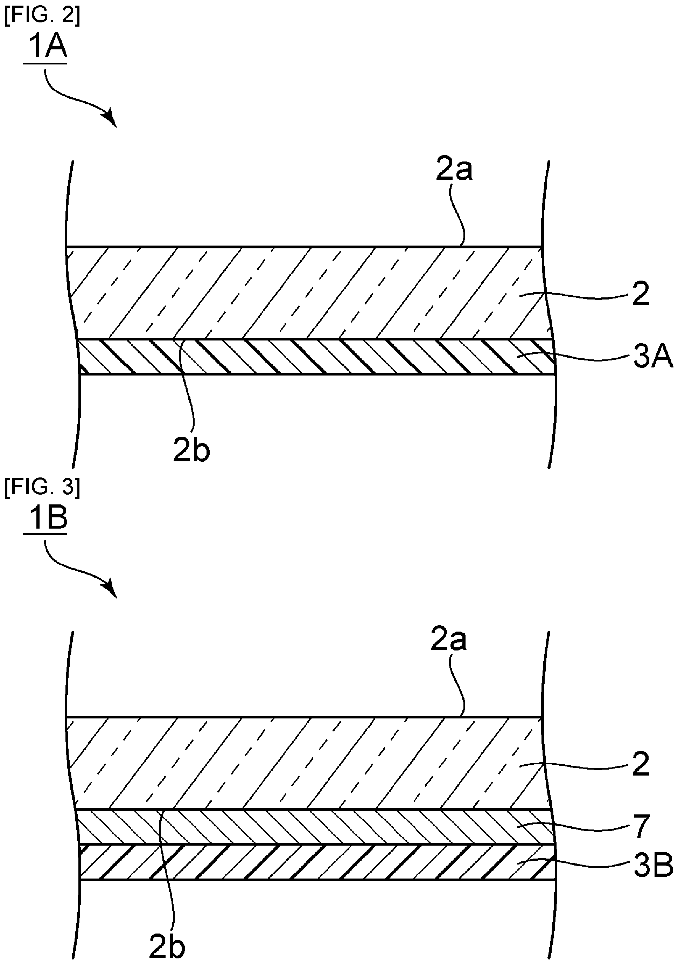

   Fig. 2 is a schematic cross-sectional view showing a cooker top plate according to a second embodiment of the present invention.
[Fig. 3]
   Fig. 3 is a schematic cross-sectional view showing a cooker top plate according to a third embodiment of the present invention.
[Fig. 4]

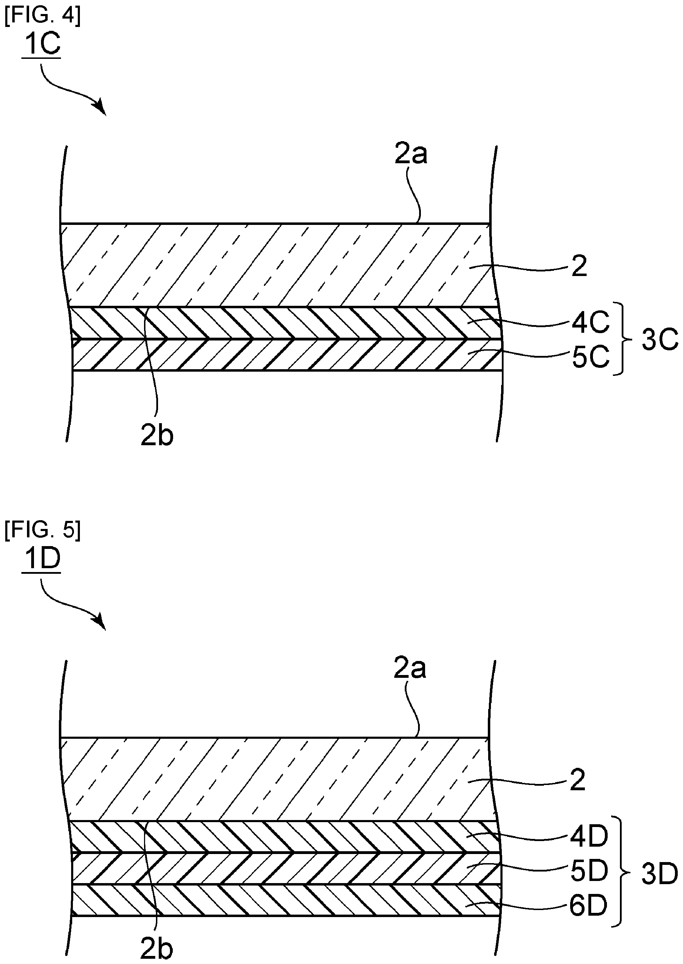

   Fig. 4 is a schematic cross-sectional view showing a cooker top plate according to a fourth embodiment of the present invention.
[Fig. 5]
   Fig. 5 is a schematic cross-sectional view showing a cooker top plate according to a fifth embodiment of the present invention.

### [Description of Embodiments]

Hereinafter, a description will be given of preferred embodiments. However, the following embodiments are merely illustrative and the present invention is not limited to the following embodiments. Throughout the drawings, members having substantially the same functions may be referred to by the same reference characters.

### [First Embodiment]

Fig. 1 is a schematic cross-sectional view showing a cooker top plate according to a first embodiment of the present invention.

A cooker top plate 1 shown in Fig. 1 includes a glass substrate 2. The glass substrate 2 has a cooking surface 2a and a back surface 2b. The cooking surface 2a and the back surface 2b are surfaces opposed to each other. The cooking surface 2a is a surface located on the side of the substrate where a cooking utensil, such as a pot or a frying pan, is to be put. The back surface 2b is a surface located toward the interior of the cooker and facing a light source and a heater. Therefore, the cooking surface 2a and the back surface 2b are top and back sides of the same substrate.

A heat-resistant resin layer 3 is disposed on the back surface 2b of the glass substrate 2. The back surface 2b of the glass substrate 2 is in contact with the heat-resistant resin layer 3. In this embodiment, the heat-resistant resin layer 3 includes a first layer 4 and a second layer 5. More specifically, the first layer 4 is disposed on the back surface 2b of the glass substrate 2 and next the second layer 5 is disposed on the first layer 4. The first layer 4 is a surface layer of the heat-resistant resin layer 3 located on a side thereof the glass substrate 2. The second layer 5 is a surface layer of the heat-resistant resin layer 3 located on a side thereof opposite to the glass substrate 2 side.

The heat-resistant resin layer 3 includes a layer (X) containing a silicone resin and a pigment, wherein the pigment contains a flaky pigment (hereinafter, referred to also as a flaky pigment (A)) having a Mohs hardness of 2.5 or more and a needle-like crystalline pigment (hereinafter, referred to also as a needle-like crystalline pigment (B)) having a Mohs hardness of 2.5 or more. In this embodiment, each of the first layer 4 and the second layer 5 is a layer (X) containing a silicone resin and a pigment, the pigment containing a flaky pigment (A) and a needle-like crystalline pigment (B).

In the layer (X), the total content of the flaky pigment (A) and the needle-like crystalline pigment (B) per 100% by mass of pigment is 85% by mass or more and the mass ratio of the content of the flaky pigment (A) to the content of the needle-like crystalline pigment (B) (content of flaky pigment (A) to content of needle-like crystalline pigment (B)) is not less than 1.0 and not more than 35.0.

In other words, the layer (X) is a layer having all the following compositions (1X), (2X), and (3X).

(1X) : The layer contains a silicone resin and a pigment, wherein the pigment contains a flaky pigment (A) having a Mohs hardness of 2.5 or more and a needle-like crystalline pigment (B) having a Mohs hardness of 2.5 or more.

(2X) : The total content of the flaky pigment (A) and the needle-like crystalline pigment (B) per 100% by mass of pigment is 85% by mass or more.

(3X) : The mass ratio of the content of the flaky pigment (A) to the content of the needle-like crystalline pigment (B) (content of flaky pigment (A) to content of needle-like crystalline pigment (B)) is not less than 1.0 and not more than 35.0.

Since the cooker top plate 1 has the above compositions, the scratch resistance and the adhesion of the heat-resistant resin layer 3 can be increased.

The flaky pigment (A) has large strength in a direction parallel to its orientation direction, but has relatively small strength in a direction perpendicular to the orientation direction. On the other hand, the needle-like crystalline pigment (B) is inferior in strength to the flaky pigment (A) because of its elongated shape, but has large strength in all directions because it does not have a single orientation. The inventor found that both the scratch resistance and the adhesion of the heat-resistant resin layer can be increased by increasing the total content of the flaky pigment (A) and the needle-like crystalline pigment (B) in at least one of layers constituting the heat-resistant resin layer and using the flaky pigment (A) and the needle-like crystalline pigment (B) at a specific mass ratio in the at least one layer.

The heat-resistant resin layer may include a layer other than the layer (X) as will be described hereinafter and shown in Fig. 4. In the present specification, the layer that can be included in the heat-resistant resin layer in addition to the layer (X) is referred to also as a "layer (Y)". Specifically, the layer (Y) is a layer not having at least one of the following compositions (1Y), (2Y), and (3Y).

(1Y) : The layer contains a silicone resin and a pigment, wherein the pigment contains a flaky pigment having a Mohs hardness of 2.5 or more and a needle-like crystalline pigment having a Mohs hardness of 2.5 or more.

(2Y): The total content of flaky pigment having a Mohs hardness of 2.5 or more and needle-like crystalline pigment having a Mohs hardness of 2.5 or more per 100% by mass of pigment is 85% by mass or more.

(3Y): The mass ratio of the content of flaky pigment having a Mohs hardness of 2.5 or more to the content of needle-like crystalline pigment having a Mohs hardness of 2.5 or more (content of flaky pigment having a Mohs hardness of 2.5 or more to content of needle-like crystalline pigment having a Mohs hardness of 2.5 or more) is not less than 1.0 and not more than 35.0.

Hereinafter, a description will be given of details of the members and layers constituting the cooker top plate 1.

### (Glass Substrate)

The glass substrate 2 is preferably a glass substrate that transmits light in at least a part of a wavelength range of 450 nm to 700 nm. The glass substrate 2 is preferably a clear glass substrate. The glass substrate 2 may be clear and colored, but is preferably clear and colorless from the perspective of further improving the aesthetic appearance of the cooker top plate. Note that, in the present specification, "clear" of the glass substrate means that the light transmittance in a visible wavelength range of 450 nm to 700 nm is 70% or more.

The cooker top plate 1 undergoes heating and cooling repeatedly. Therefore, the glass substrate 2 preferably has high heat resistance and a low coefficient of thermal expansion. Specifically, the softening temperature of the glass substrate 2 is preferably 700°C or higher and more preferably 750°C or higher. Furthermore, the average coefficient of linear thermal expansion of the glass substrate 2 at 30°C to 750°C is preferably in a range of -10 × 10⁻⁷/°C to +60 × 10⁻⁷/°C, more preferably in a range of -10 × 10⁻⁷/°C to +50 × 10⁻⁷/°C, and still more preferably in a range of -10 × 10⁻⁷/°C to +40 × 10⁻⁷/°C. Therefore, the glass substrate 2 is preferably made of a glass having a high glass transition temperature and low expansibility or made of a low-expansion crystallized glass. A specific example of the low-expansion crystallized glass is a LAS-based crystallized glass "N-0" manufactured by Nippon Electric Glass Co., Ltd. A borosilicate glass substrate or the like may be used as the glass substrate.

The thickness of the glass substrate 2 is not particularly limited. The thickness of the glass substrate 2 can be appropriately selected according to the light transmittance and so on. The thickness of the glass substrate 2 may be, for example, about 2 mm to about 6 mm.

### (Heat-Resistant Resin Layer)

The heat-resistant resin layer 3 is disposed on the back surface 2b of the glass substrate 2. The heat-resistant resin layer 3 has a two-layer structure. Specifically, the heat-resistant resin layer 3 includes the first layer 4 and the second layer 5 disposed on one surface of the first layer 4 located on the opposite side to the other surface thereof next to the glass substrate 2 side. The first layer 4 and the second layer 5 are preferably colored in different colors. For example, it is possible that the first layer 4 is a white layer and the second layer 5 is a gray layer. However, the colors of the first layer 4 and the second layer 5 are not particularly limited and can be appropriately selected in consideration of design and the hideability of the internal structure of the cooker.

Each of the first layer 4 and the second layer 5 contains a silicone resin and a pigment. Each of the pigment contained in the first layer 4 and the pigment contained in the second layer 5 contains a flaky pigment (A) and a needle-like crystalline pigment (B). In the present invention, the heat-resistant resin layer 3 is sufficient to include at least one layer (X) containing a flaky pigment (A) and a needle-like crystalline pigment (B). Specifically, in the heat-resistant resin layer 3, the first layer 4 may be a layer (X), the first layer 4 may be a layer (Y), the second layer 5 may be a layer (X), the second layer 5 may be a layer (Y) or both the first layer 4 and the second layer 5 may be layers (X).

However, from the viewpoint of more effectively exerting the effects of the invention, in the case of a heat-resistant resin layer having a two or more layer structure, all the layers of the heat-resistant resin layer are preferably layers (X). Therefore, each of the first layer 4 and the second layer 5 is preferably a layer (X).

### <Silicone Resin>

The layer (X) contains a silicone resin. The heat-resistant resin layer 3 contains a silicone resin. The silicone resin that can be used is any heretofore known silicone resin for use in heat-resistant resin layers of cooker top plates. Each of the layer (Y), the first layer 4, and the second layer 5 preferably contains a silicone resin. In the case where the heat-resistant resin layer 3 has a two or more layer structure, all the layers of the heat-resistant resin layer 3 preferably contain a silicone resin. The silicone resin may be used as one type or as a combination of two or more types . The silicone resins contained in the layers constituting the heat-resistant resin layer 3 may be of the same type or different types.

The silicon resin for use is preferably a silicone resin having high heat resistance. From the viewpoint of further increasing the heat resistance of the heat-resistant resin layer 3 and effectively suppressing discoloration of the heat-resistant resin layer 3 when the cooker top plate 1 has reached high temperatures, the silicone resin is preferably, for example, a silicone resin having a structure in which a methyl group or a phenyl group is attached directly to a silicon atom. In this case, a methyl group may be attached directly to a silicon atom, a phenyl group may be attached directly to a silicon atom, or a methyl group and a phenyl group may be attached directly to the same silicon atom.

The silicone resin can be obtained by curing a silicone resin component. The silicone resin component may contain a monomer, may contain a silicone oligomer or may contain a silicone resin.

Examples of marketed products that can be used as the silicone resin component include "Straight Silicone Varnish KR282", "Straight Silicone Varnish KR271", "Straight Silicone Varnish KR311", "Modified Silicone Varnish KR211", "Silicone Alkyd Varnish", and "Silicone Epoxy Varnish ES100N", all manufactured by Shin-Etsu Chemical Co., Ltd., and "TSR-145" manufactured by Momentive Performance Materials Inc.

The silicone resin component may contain a multifunctional silicone oligomer. The heat-resistant resin layer 3 may contain a multifunctional silicone oligomer. The multifunctional silicone oligomer has a large number of hydroxyl groups serving as reaction sites and is not excessively high in molecular weight and, therefore, can increase the cross-linking density. Furthermore, since the multifunctional silicone oligomer has a large number of hydroxyl groups, it can further increase the adhesion between the heat-resistant resin layer 3 and the glass substrate 2 and the adhesion between the first layer 4 and the second layer 5.

The multifunctional silicone oligomer is preferably a multifunctional silicone oligomer having a hydroxyl value of 300 mgKOH/g or more after hydrolysis.

The content of silicone resin in the layer (X) (the content of silicone resin per 100% by mass of layer (X)) is preferably not less than 20% by mass, more preferably not less than 30% by mass, preferably not more than 70% by mass, and more preferably not more than 60% by mass. When the above content of silicone resin is the above lower limit or more, the heat resistance, the solvent resistance, and the impact resistance of the heat-resistant resin layer 3 can be further increased. When the above content of silicone resin is the above upper limit or less, the mechanical strength of the cooker top plate 1 can be further increased.

The content of silicone resin in the heat-resistant resin layer 3 (the content of silicone resin per 100% by mass of heat-resistant resin layer) is preferably not less than 20% by mass, more preferably not less than 30% by mass, preferably not more than 70% by mass, and more preferably not more than 60% by mass. When the above content of silicone resin is the above lower limit or more, the heat resistance, the solvent resistance, and the impact resistance of the heat-resistant resin layer 3 can be further increased. When the above content of silicone resin is the above upper limit or less, the mechanical strength of the cooker top plate 1 can be further increased.

The content of silicone resin in the first layer 4 (the content of silicone resin per 100% by mass of first layer) is preferably not less than 20% by mass, more preferably not less than 30% by mass, preferably not more than 70% by mass, and more preferably not more than 60% by mass. When the above content of silicone resin is the above lower limit or more, the heat resistance, the solvent resistance, and the impact resistance of the heat-resistant resin layer 3 can be further increased. When the above content of silicone resin is the above upper limit or less, the mechanical strength of the cooker top plate 1 can be further increased.

The content of silicone resin in the second layer 5 (the content of silicone resin per 100% by mass of second layer) is preferably not less than 20% by mass, more preferably not less than 30% by mass, preferably not more than 70% by mass, and more preferably not more than 60% by mass. When the above content of silicone resin is the above lower limit or more, the heat resistance, the solvent resistance, and the impact resistance of the heat-resistant resin layer 3 can be further increased. When the above content of silicone resin is the above upper limit or less, the mechanical strength of the cooker top plate 1 can be further increased.

### <Pigment>

The layer (X) contains a pigment, wherein the pigment contains a flaky pigment (A) and a needle-like crystalline pigment (B). The heat-resistant resin layer 3 contains a pigment, wherein the pigment contains a flaky pigment (A) and a needle-like crystalline pigment (B) . The layer (Y) may contain a pigment or may be free of pigment.

From the viewpoint of increasing the pencil hardness of the heat-resistant resin layer 3 and the scratch resistance of the heat-resistant resin layer 3, the total content of the flaky pigment (A) and the needle-like crystalline pigment (B) per 100% by mass of pigment in the layer (X) is 85% by mass or more.

From the viewpoint of further increasing the scratch resistance of the heat-resistant resin layer 3, the total content of the flaky pigment (A) and the needle-like crystalline pigment (B) per 100% by mass of pigment in the layer (X) is preferably 90% by mass or more, and more preferably 95% by mass or more.

From the viewpoint of increasing the pencil hardness of the heat-resistant resin layer 3 and the scratch resistance of the heat-resistant resin layer 3, the total content of the flaky pigment (A) and the needle-like crystalline pigment (B) per 100% by mass of pigment in the heat-resistant resin layer 3 is preferably 50% by mass or more, more preferably 60% by mass or more, even more preferably 70% by mass or more, even still more preferably 80% by mass or more, even yet still more preferably 85% by mass or more, particularly preferably 90% by mass or more, and most preferably 95% by mass or more.

When the first layer 4 is the layer (X), from the viewpoint of further increasing the scratch resistance of the heat-resistant resin layer 3, the total content of the flaky pigment (A) and the needle-like crystalline pigment (B) per 100% by mass of pigment in the first layer 4 is 85% by mass or more, preferably 90% by mass or more, and more preferably 95% by mass or more. When the first layer 4 is the layer (Y) and contains the flaky pigment (A) and the needle-like crystalline pigment (B), from the viewpoint of further increasing the scratch resistance of the heat-resistant resin layer 3, the total content of the flaky pigment (A) and the needle-like crystalline pigment (B) per 100% by mass of pigment in the first layer 4 is preferably 5% by mass or more, more preferably 10% by mass or more, still more preferably 20% by mass or more, and particularly preferably 30% by mass or more.

When the second layer 5 is the layer (X), from the viewpoint of further increasing the scratch resistance of the heat-resistant resin layer 3, the total content of the flaky pigment (A) and the needle-like crystalline pigment (B) per 100% by mass of pigment in the second layer 5 is 85% by mass or more, preferably 90% by mass or more, and more preferably 95% by mass or more. When the second layer 5 is the layer (Y) and contains the flaky pigment (A) and the needle-like crystalline pigment (B), from the viewpoint of further increasing the scratch resistance of the heat-resistant resin layer 3, the total content of the flaky pigment (A) and the needle-like crystalline pigment (B) per 100% by mass of pigment in the second layer 5 is preferably 5% by mass or more, more preferably 10% by mass or more, still more preferably 20% by mass or more, and particularly preferably 30% by mass or more.

The content of pigment per 100% by mass of pigment-containing layer (the layer (X), the layer (Y), the heat-resistant resin layer 3, the first layer 4 or the second layer 5) is preferably not less than 5% by mass, more preferably not less than 10% by mass, preferably not more than 70% by mass, and more preferably not more than 60% by mass. When the above content of pigment is not less than the above lower limit and not more than the above upper limit, the effects of the invention can be more effectively exerted.

From the viewpoint of exerting the effects of the invention, the mass ratio of the content of the flaky pigment (A) to the content of the needle-like crystalline pigment (B) (content of flaky pigment (A) to content of needle-like crystalline pigment (B)) in the layer (X) is not less than 1.0 and not more than 35.0.

From the viewpoint of more effectively exerting the effects of the invention, the mass ratio of the content of the flaky pigment (A) to the content of the needle-like crystalline pigment (B) (content of flaky pigment (A) to content of needle-like crystalline pigment (B)) in the layer (X) is preferably not less than 1.5, preferably not more than 19.0, and more preferably not more than 10.0.

From the viewpoint of exerting the effects of the invention, the mass ratio of the content of the flaky pigment (A) to the content of the needle-like crystalline pigment (B) (content of flaky pigment (A) to content of needle-like crystalline pigment (B)) in the heat-resistant resin layer 3 is preferably not less than 1.0, more preferably not less than 1.5, preferably not more than 35.0, more preferably not more than 19.0, and even more preferably not more than 10.0.

When the first layer 4 is the layer (X), from the viewpoint of more effectively exerting the effects of the invention, the mass ratio of the content of the flaky pigment (A) to the content of the needle-like crystalline pigment (B) (content of flaky pigment (A) to content of needle-like crystalline pigment (B)) in the first layer 4 is not less than 1.0 and not more than 35.0, preferably not less than 1.5, preferably not more than 19.0, and more preferably not more than 10.0. When the first layer 4 is the layer (Y) and contains the flaky pigment (A) and the needle-like crystalline pigment (B), from the viewpoint of more effectively exerting the effects of the invention, the mass ratio of the content of the flaky pigment (A) to the content of the needle-like crystalline pigment (B) (content of flaky pigment (A) to content of needle-like crystalline pigment (B)) in the first layer 4 is preferably not less than 1.0, more preferably not less than 1.5, preferably not more than 19.0, and more preferably not more than 10.0.

When the second layer 5 is the layer (X), from the viewpoint of more effectively exerting the effects of the invention, the mass ratio of the content of the flaky pigment (A) to the content of the needle-like crystalline pigment (B) (content of flaky pigment (A) to content of needle-like crystalline pigment (B)) in the second layer 5 is not less than 1.0 and not more than 35.0, preferably not less than 1.5, preferably not more than 19.0, and more preferably not more than 10.0. When the second layer 5 is the layer (Y) and contains the flaky pigment (A) and the needle-like crystalline pigment (B), from the viewpoint of more effectively exerting the effects of the invention, the mass ratio of the content of the flaky pigment (A) to the content of the needle-like crystalline pigment (B) (content of flaky pigment (A) to content of needle-like crystalline pigment (B)) in the second layer 5 is preferably not less than 1.0, more preferably not less than 1.5, preferably not more than 19.0, and more preferably not more than 10.0.

### Flaky Pigment (A):

The flaky pigment (A) is a flaky pigment having a Mohs hardness of 2.5 or more. The heat-resistant resin layer 3 contains the flaky pigment (A). In the present invention, it is sufficient that the heat-resistant resin layer 3 includes a layer (X) containing the flaky pigment (A). However, from the viewpoint of more effectively exerting the effects of the invention, in the case where the heat-resistant resin layer 3 has a two or more layer structure, all the layers of the heat-resistant resin layer 3 preferably contain the flaky pigment (A). Therefore, each of the first layer 4 and the second layer 5 preferably contains the flaky pigment (A). The layer (Y) may contain the flaky pigment (A) or may be free of flaky pigment (A). The flaky pigment (A) may be used as one type or as a combination of two or more types. The flaky pigments (A) contained in the layers constituting the heat-resistant resin layer 3 may be of the same type or different types.

Whether the pigment is flaky or not can be checked by observing its shape with a scanning electron microscope, a transmission electron microscope or the like.

The Mohs hardness of the flaky pigment (A) is 2.5 or more, preferably 2.6 or more, and more preferably 2.8 or more. The upper limit of the Mohs hardness of the flaky pigment (A) is not particularly limited, but is, for example, not more than 10 or not more than 9. When the above Mohs hardness is the above lower limit or more, the scratch resistance of the heat-resistant resin layer 3 can be further increased.

The aspect ratio of the flaky pigment (A) is preferably not less than 3, more preferably not less than 5, even more preferably not less than 10, preferably not more than 80, more preferably not more than 50, and even more preferably not more than 30. When the above aspect ratio is not less than the above lower limit and not more than the above upper limit, the strength of the heat-resistant resin layer 3 can be further increased and, therefore, the scratch resistance of the heat-resistant resin layer 3 can be further increased.

The aspect ratio of the flaky pigment (A) means the ratio of the average particle diameter of the flaky pigment (A) to the average thickness thereof (average particle diameter to average thickness).

The average particle diameter of the flaky pigment (A) is an average particle diameter (D₅₀) measured by a laser diffraction particle size distribution measurement device. The average thickness of the flaky pigment (A) can be determined by measuring the thicknesses of arbitrary 50 particles of the flaky pigment with a scanning electron microscope and averaging these thicknesses.

The average particle diameter of the flaky pigment (A) is preferably not less than 3 µm, more preferably not less than 5 µm, preferably not more than 50 µm, and more preferably not more than 30 µm. When the above average particle diameter is not less than the above lower limit and not more than the above upper limit, the effects of the invention can be further increased.

The average thickness of the flaky pigment (A) is preferably not less than 0.1 µm, more preferably not less than 0.2 µm, preferably not more than 2 µm, and more preferably not more than 1 µm. When the above average thickness is not less than the above lower limit and not more than the above upper limit, the effects of the invention can be further increased.

Examples of the flaky pigment (A) include a metallic pigment (hereinafter, referred to also as a metallic pigment (A1)) and an extender pigment (hereinafter, referred to also as an extender pigment (A2)) different from the metallic pigment.

Examples of the metallic pigment (A1) include aluminum, aluminum compounds, and SUS316. An example of the type of aluminum is aluminum flakes. An example of the aluminum compound is aluminum alloy flakes. The metallic pigment (A1) may be used as oner type or as a combination of two or more types.

Examples of the extender pigment (A2) include mica and talc. The extender pigment (A2) may be used as one type or as a combination of two or more types.

The flaky pigment (A) in the layer containing the flaky pigment (A) (the layer (X), the layer (Y), the heat-resistant resin layer 3, the first layer 4 or the second layer 5) preferably contains at least one of a metallic pigment (A1) and an extender pigment (A2), more preferably contains a metallic pigment (A1), and even more preferably contains both of a metallic pigment (A1) and an extender pigment (A2) . In this case, the effects of the invention can be more effectively exerted. Particularly when the heat-resistant resin layer 3 contains a metallic pigment (A1), the impact resistance of the heat-resistant resin layer 3 can be increased by the flexibility of the metallic pigment (A1) associated with deformation thereof.

The metallic pigment (A1) in the layer containing the metallic pigment (A1) (the layer (X), the layer (Y), the heat-resistant resin layer 3, the first layer 4 or the second layer 5) preferably contains at least one of aluminum and an aluminum compound and more preferably contains aluminum. In this case, the impact resistance of the heat-resistant resin layer 3 can be further increased by the flexibility of aluminum or the aluminum compound associated with deformation thereof.

The extender pigment (A2) in the layer containing the extender pigment (A2) (the layer (X), the layer (Y), the heat-resistant resin layer 3, the first layer 4 or the second layer 5) preferably contains mica.

The content of flaky pigment (A) in the layer (X) (the content of flaky pigment (A) per 100% by mass of layer (X)) is preferably not less than 5% by mass, more preferably not less than 10% by mass, preferably not more than 65% by mass, and more preferably not more than 55% by mass. When the above content of flaky pigment (A) is not less than the above lower limit and not more than the above upper limit, the scratch resistance of the heat-resistant resin layer 3 can be further increased.

The content of flaky pigment (A) in the heat-resistant resin layer 3 (the content of flaky pigment (A) per 100% by mass of heat-resistant resin layer) is preferably not less than 5% by mass, more preferably not less than 10% by mass, preferably not more than 65% by mass, and more preferably not more than 55% by mass. When the above content of flaky pigment (A) is not less than the above lower limit and not more than the above upper limit, the scratch resistance of the heat-resistant resin layer 3 can be further increased.

The content of flaky pigment (A) in the first layer 4 (the content of flaky pigment (A) per 100% by mass of first layer) is preferably not less than 5% by mass, more preferably not less than 10% by mass, preferably not more than 65% by mass, and more preferably not more than 55% by mass. When the above content of flaky pigment (A) is not less than the above lower limit and not more than the above upper limit, the scratch resistance of the heat-resistant resin layer 3 can be further increased.

The content of flaky pigment (A) in the second layer 5 (the content of flaky pigment (A) per 100% by mass of second layer) is preferably not less than 5% by mass, more preferably not less than 10% by mass, preferably not more than 65% by mass, and more preferably not more than 55% by mass. When the above content of flaky pigment (A) is not less than the above lower limit and not more than the above upper limit, the scratch resistance of the heat-resistant resin layer 3 can be further increased.

The content of metallic pigment (A1) in the layer (X) (the content of metallic pigment (A1) per 100% by mass of layer (X)) is preferably not less than 10% by mass, more preferably not less than 20% by mass, preferably not more than 55% by mass, more preferably not more than 45% by mass, and even more preferably not more than 40% by mass. When the above content of metallic pigment (A1) is not less than the above lower limit and not more than the above upper limit, the scratch resistance and the impact resistance of the heat-resistant resin layer 3 can be further increased.

The content of metallic pigment (A1) in the heat-resistant resin layer 3 (the content of metallic pigment (A1) per 100% by mass of heat-resistant resin layer) is preferably not less than 10% by mass, more preferably not less than 20% by mass, preferably not more than 55% by mass, more preferably not more than 45% by mass, and even more preferably not more than 40% by mass. When the above content of metallic pigment (A1) is not less than the above lower limit and not more than the above upper limit, the scratch resistance and the impact resistance of the heat-resistant resin layer 3 can be further increased.

The content of metallic pigment (A1) in the first layer 4 (the content of metallic pigment (A1) per 100% by mass of first layer) is preferably not less than 10% by mass, more preferably not less than 20% by mass, preferably not more than 55% by mass, more preferably not more than 45% by mass, and even more preferably not more than 40% by mass. When the above content of metallic pigment (A1) is not less than the above lower limit and not more than the above upper limit, the scratch resistance and the impact resistance of the heat-resistant resin layer 3 can be further increased.

The content of metallic pigment (A1) in the second layer 5 (the content of metallic pigment (A1) per 100% by mass of second layer) is preferably not less than 10% by mass, more preferably not less than 20% by mass, preferably not more than 55% by mass, more preferably not more than 45% by mass, and even more preferably not more than 40% by mass. When the above content of metallic pigment (A1) is not less than the above lower limit and not more than the above upper limit, the scratch resistance and the impact resistance of the heat-resistant resin layer 3 can be further increased.

### Needle-like Crystalline Pigment (B):

The needle-like crystalline pigment (B) is a needle-like crystalline pigment having a Mohs hardness of 2.5 or more. The heat-resistant resin layer 3 contains the needle-like crystalline pigment (B). In the present invention, it is sufficient that the heat-resistant resin layer 3 includes the layer (X) containing a needle-like crystalline pigment (B). However, from the viewpoint of more effectively exerting the effects of the invention, in the case where the heat-resistant resin layer 3 has a two or more layer structure, all the layers of the heat-resistant resin layer 3 preferably contain the needle-like crystalline pigment (B). Therefore, each of the first layer 4 and the second layer 5 preferably contains the needle-like crystalline pigment (B). The layer (Y) may contain the needle-like crystalline pigment (B) or may be free of needle-like crystalline pigment (B). The needle-like crystalline pigment (B) may be used as one type or as a combination of two or more types. The needle-like crystalline pigments (B) contained in the layers of the heat-resistant resin layer 3 may be of the same type or different types.

The needle-like crystalline pigment (B) is a pigment having a needle crystal structure. Whether or not the pigment has a needle crystal structure can be checked by observing its shape with a scanning electron microscope, a transmission electron microscope or the like.

The Mohs hardness of the needle-like crystalline pigment (B) is 2.5 or more, preferably 3 or more, and more preferably 4 or more. When the above Mohs hardness is the above lower limit or more, the scratch resistance of the heat-resistant resin layer 3 can be further increased.

The average length of the needle-like crystalline pigment (B) is preferably not less than 5 µm, more preferably not less than 8 µm, preferably not more than 60 µm, and more preferably not more than 40 µm. When the above average length is not less than the above lower limit and not more than the above upper limit, the effects of the invention can be more effectively exerted.

The average diameter of the needle-like crystalline pigment (B) is preferably not less than 0.1 µm, more preferably not less than 0.2 µm, preferably not more than 7 µm, and more preferably not more than 5 µm. When the above average diameter is not less than the above lower limit and not more than the above upper limit, the effects of the invention can be more effectively exerted.

The aspect ratio of the needle-like crystalline pigment (B) is preferably not less than 8, more preferably not less than 10, preferably not more than 100, and more preferably not more than 80. When the above aspect ratio is not less than the above lower limit and not more than the above upper limit, the effects of the invention can be more effectively exerted.

The average length and average diameter of the needle-like crystalline pigment (B) can be determined by measuring the lengths and diameters of arbitrary 50 particles of the needle-like crystalline pigment with a scanning electron microscope and averaging these lengths and these diameters, respectively. The aspect ratio of the needle-like crystalline pigment (B) means the ratio of the average length of the needle-like crystalline pigment (B) to the average diameter thereof (average length to average diameter).

Examples of the needle-like crystalline pigment (B) include potassium titanate, calcium silicate, and titanium oxide.

The needle-like crystalline pigment (B) in the layer containing the needle-like crystalline pigment (B) (the layer (X), the layer (Y), the heat-resistant resin layer 3, the first layer 4 or the second layer 5) preferably contains at least one selected from the group consisting of potassium titanate, calcium silicate, and titanium oxide and more preferably contains potassium titanate. In this case, the effects of the invention can be more effectively exerted.

The content of needle-like crystalline pigment (B) in the layer (X) (the content of needle-like crystalline pigment (B) per 100% by mass of layer (X)) is preferably not less than 1% by mass, more preferably not less than 5% by mass, preferably not more than 25% by mass, and more preferably not more than 15% by mass. When the above content of needle-like crystalline pigment (B) is not less than the above lower limit and not more than the above upper limit, the effects of the invention can be more effectively exerted.

The content of needle-like crystalline pigment (B) in the heat-resistant resin layer 3 (the content of needle-like crystalline pigment (B) per 100% by mass of heat-resistant resin layer) is preferably not less than 1% by mass, more preferably not less than 5% by mass, preferably not more than 25% by mass, and more preferably not more than 15% by mass. When the above content of needle-like crystalline pigment (B) is not less than the above lower limit and not more than the above upper limit, the effects of the invention can be more effectively exerted.

The content of needle-like crystalline pigment (B) in the first layer 4 (the content of needle-like crystalline pigment (B) per 100% by mass of first layer) is preferably not less than 1% by mass, more preferably not less than 5% by mass, preferably not more than 25% by mass, and more preferably not more than 15% by mass. When the above content of needle-like crystalline pigment (B) is not less than the above lower limit and not more than the above upper limit, the effects of the invention can be more effectively exerted and the occurrence of breakages and cracks in the heat-resistant resin layer 3 due to volume contraction of the silicone resin can be more effectively suppressed.

The content of needle-like crystalline pigment (B) in the second layer 5 (the content of needle-like crystalline pigment (B) per 100% by mass of second layer) is preferably not less than 1% by mass, more preferably not less than 5% by mass, preferably not more than 25% by mass, and more preferably not more than 15% by mass. When the above content of needle-like crystalline pigment (B) is not less than the above lower limit and not more than the above upper limit, the effects of the invention can be more effectively exerted and, particularly, the adhesion of the heat-resistant resin layer 3 can be further increased.

### Color Pigment:

Each of the layer (X), the layer (Y), the heat-resistant resin layer 3, the first layer 4, and the second layer 5 may contain a pigment different from both the flaky pigment (A) and the needle-like crystalline pigment (B). An example of such a pigment is a color pigment. In the case where the heat-resistant resin layer 3 contains a color pigment, it is possible that the first layer 4 contains a first color pigment and the second layer 5 contains a second color pigment different from the first color pigment. In this case, an appropriate combination of color pigments can be selected in consideration of design and the hideability of the interior of the cooker. The color pigment may be used as one type or as a combination of two or more types.

From the viewpoint of increasing the number of variations of colors that can be given to the heat-resistant resin layer 3, in the case where the heat-resistant resin layer 3 has a two or more layer structure, the surface layer of the heat-resistant resin layer 3 next to the glass substrate 2 side preferably contains a color pigment. Therefore, in the heat-resistant resin layer 3, the first layer 4 preferably contains a color pigment. From the viewpoint of further increasing the number of variations of colors that can be given to the heat-resistant resin layer 3, the surface layer of the heat-resistant resin layer 3 next to the glass substrate 2 side is preferably a layer (Y) containing a color pigment.

An example of the color pigment is a spherical color pigment.

Examples of the color pigment include: white pigment powders, such as TiO₂ powder, ZrO₂ powder, and ZrSiO₄ powder; blue inorganic pigment powders containing Co; green inorganic pigment powders containing Co; Ti-Sb-Cr-based or Ti-Ni-based yellow inorganic pigment powders, Co-Si-based red inorganic pigment powders; brown inorganic pigment powders containing Fe; and black inorganic pigment powders containing Cu.

Examples of the blue inorganic pigment powders containing Co include Co-Al-based and Co-Al-Ti-based inorganic pigment powders. An example of the Co-Al-based inorganic pigment powders is CoAl₂O₄ powder. An example of the Co-Al-Ti-based inorganic pigment powders is CoAl₂O₄-TiO₂-Li₂O powder.

Examples of the green inorganic pigment powders containing Co include Co-Al-Cr-based and Co-Ni-Ti-Zn-based inorganic pigment powders. An example of the Co-Al-Cr-based inorganic pigment powders is Co(Al, Cr)₂O₄ powder. An example of the Co-Ni-Ti-Zn-based inorganic pigment powders is (Co, Ni, Zn)₂TiO₄ powder.

Examples of the brown inorganic pigment powders containing Fe include Fe-Zn-based inorganic pigment powders. An example of the Fe-Zn-based inorganic pigment powders is (Zn, Fe) Fe₂O₄ powder.

Examples of the black inorganic pigment powders containing Cu include Cu-Cr-based inorganic pigment powders and Cu-Fe-based inorganic pigment powders. Examples of the Cu-Cr-based inorganic pigment powders include Cu(Cr, Mn)₂O₄ powder and Cu-Cr-Mn powder. An example of the Cu-Fe-based inorganic pigment powders is Cu-Fe-Mn powder.

The thickness of each of the layer (X), the layer (Y), the first layer 4, and the second layer 5 is not particularly limited, but is preferably not less than 5 µm, more preferably not less than 8 µm, preferably not more than 50 µm, and more preferably not more than 30 µm. When the thickness of each of the layers is within the above range, delamination of the heat-resistant resin layer 3 due to heating and cooling repeatedly applied thereto can be more effectively prevented and the design and the hideability of the interior of the cooker can be further increased.

Furthermore, the entire thickness of the heat-resistant resin layer 3 (the total thickness of the first layer 4 and the second layer 5) is also not particularly limited, but is preferably not less than 5 µm, more preferably not less than 10 µm, preferably not more than 70 µm, and more preferably not more than 30 µm. When the entire thickness of the heat-resistant resin layer 3 is within the above range, delamination of the heat-resistant resin layer 3 due to heating and cooling repeatedly applied thereto can be more certainly prevented and the design and the hideability of the interior of the cooker can be further increased.

Hereinafter, a description will be given of an example of a method for producing a cooker top plate 1.

### (Production Method)

In an example of a method for producing a cooker top plate 1, first, a paste containing a silicone resin component, a flaky pigment (A), and a needle-like crystalline pigment (B) is prepared. The paste may contain other components, including a color pigment, a curing catalyst, a cross-linking agent, a solvent, a viscosity regulator, a leveling agent, and a defoamer. In this embodiment, a paste for forming a first layer and a paste for forming a second layer are prepared separately. The type of the solvent is not particularly limited, but, for example, xylene can be used.

Next, the paste for forming a first layer is applied to the back surface 2b of a glass substrate 2. Subsequently, the glass substrate 2 to which the paste for forming a first layer is applied is heated to dry the paste for forming a first layer and cure the silicone resin component, thus forming a first layer 4. Depending on the composition of the first layer 4, the first layer 4 after the drying may be further subjected to firing.

Next, the paste for forming a second layer is applied to the first layer 4. Subsequently, the glass substrate 2 in which the paste for forming a second layer is applied to the first layer 4 is heated to dry the paste for forming a second layer and cure the silicone resin component, thus forming a second layer 5. Thus, a heat-resistant resin layer 3 can be formed. Depending on the composition of the second layer 5, the second layer 5 after the drying may be further subjected to firing.

In the case where aluminum or an aluminum compound is contained as the flaky pigment (A) in the paste, it functions also as a curing catalyst for the silicone resin component and, therefore, the curing reaction of the silicone resin component can be more efficiently performed.

The application speed and viscosity of the paste can be appropriately selected according to the content of pigment in the heat-resistant resin layer 3. For example, when the content of pigment in the heat-resistant resin layer 3 is large, it is preferred to decrease the viscosity of the silicone resin component, such as by increasing the amount of solvent, and reduce the application speed of the paste.

The heating temperature for the paste may be, for example, not lower than 60°C and not higher than 200°C. The heating time for the paste may be, for example, not less than 1 minute and not more than 30 minutes.

The firing temperature may be, for example, not lower than 200°C and not higher than 450°C. The firing time may be, for example, not less than ten minutes and not more than an hour.

### [Second Embodiment]

Fig. 2 is a schematic cross-sectional view showing a cooker top plate according to a second embodiment of the present invention.

A cooker top plate 1A shown in Fig. 2 includes a glass substrate 2 and a heat-resistant resin layer 3A. The cooker top plate 1A shown in Fig. 2 is different in the structure of the heat-resistant resin layer from the cooker top plate 1 shown in Fig. 1. Specifically, the cooker top plate 1 shown in Fig. 1 is provided with a heat-resistant resin layer 3 having a two-layer structure, whereas the cooker top plate 1A shown in Fig. 2 is provided with a heat-resistant resin layer 3A having a single-layer structure.

The heat-resistant resin layer 3A is disposed on the back surface 2b of the glass substrate 2. The heat-resistant resin layer 3A is a layer (X) containing a silicone resin and a pigment, the pigment containing a flaky pigment (A) and a needle-like crystalline pigment (B) . The heat-resistant resin layer 3A has a single-layer structure formed only of the layer (X). As the silicone resin, the flaky pigment (A), and the needle-like crystalline pigment (B), those described in the first embodiment can be appropriately used. Furthermore, the heat-resistant resin layer 3A may contain, like the first embodiment, a color pigment or so on.

In the heat-resistant resin layer 3A of the cooker top plate 1A, the total content of the flaky pigment (A) and the needle-like crystalline pigment (B) per 100% by mass of pigment is 85% by mass or more and the mass ratio of the content of the flaky pigment (A) to the content of the needle-like crystalline pigment (B) (content of flaky pigment (A) to content of needle-like crystalline pigment (B)) is not less than 1.0 and not more than 35.0. Therefore, also in the cooker top plate 1A, the scratch resistance and the adhesion of the heat-resistant resin layer 3A can be increased.

The details of the glass substrate 2, the silicone resin, the flaky pigment (A), the needle-like crystalline pigment (B), and the other components are as described in the first embodiment and, therefore, further description thereof will be omitted. Furthermore, the preferred forms of the heat-resistant resin layer 3A in this embodiment, including the respective preferred ranges of contents of the silicone resin, the flaky pigment (A), and the needle-like crystalline pigment (B) in each of the heat-resistant resin layer 3A and the layer (X), and the preferred range of mass ratios (content of flaky pigment (A) to content of needle-like crystalline pigment (B)) in the heat-resistant resin layer 3A, are the same as the preferred forms of the heat-resistant resin layer 3 and the layer (X) described in the first embodiment.

The thickness of the heat-resistant resin layer 3A is not particularly limited, but is preferably not less than 5 µm, more preferably not less than 10 µm, preferably not more than 50 µm, and more preferably not more than 30 µm . When the thickness of the heat-resistant resin layer 3A is within the above range, delamination of the heat-resistant resin layer 3A due to heating and cooling repeatedly applied thereto can be more certainly prevented and the design and the hideability of the interior of the cooker can be further increased.

The manner of forming the heat-resistant resin layer 3A is also not particularly limited and the heat-resistant resin layer 3A can be formed in the same manner as in the first embodiment. Specifically, first, a paste containing a silicone resin component, a flaky pigment (A), and a needle-like crystalline pigment (B) is prepared. The paste may contain other components, including a color pigment, a curing catalyst, a cross-linking agent, a solvent, a viscosity regulator, a leveling agent, and a defoamer. Next, the prepared paste is applied to the back surface 2b of the glass substrate 2. Subsequently, the glass substrate 2 to which the paste is applied is heated to dry the paste and cure the silicone resin component. Thus, a heat-resistant resin layer 3A can be formed. Depending on the composition of the heat-resistant resin layer 3A, the heat-resistant resin layer 3A after the drying may be further subjected to firing.

### [Third Embodiment]

Fig. 3 is a schematic cross-sectional view showing a cooker top plate according to a third embodiment of the present invention.

A cooker top plate 1B shown in Fig. 3 includes a glass substrate 2, a heat-resistant resin layer 3B, and an inorganic light-shielding layer 7. The cooker top plate 1B shown in Fig. 3 and the cooker top plate 1A shown in Fig. 2 are different in the presence or absence of an inorganic light-shielding layer.

The inorganic light-shielding layer 7 is disposed right on the back surface 2b of the glass substrate 2. The heat-resistant resin layer 3B is disposed on one surface of the inorganic light-shielding layer 7 located on the opposite side to the other surface thereof next to the glass substrate 2 side. The heat-resistant resin layer 3B is disposed over the back surface 2b of the glass substrate 2 with the inorganic light-shielding layer 7 in between. The heat-resistant resin layer 3B is a layer (X) containing a silicone resin and a pigment, the pigment containing a flaky pigment (A) and a needle-like crystalline pigment (B) . The heat-resistant resin layer 3B has a single-layer structure formed only of the layer (X) . The same material as the heat-resistant resin layer 3A in the second embodiment can be used as the heat-resistant resin layer 3B.

Also in the heat-resistant resin layer 3B of the cooker top plate 1B according to this embodiment, the total content of the flaky pigment (A) and the needle-like crystalline pigment (B) per 100% by mass of pigment is 85% by mass or more and the mass ratio of the content of the flaky pigment (A) to the content of the needle-like crystalline pigment (B) (content of flaky pigment (A) to content of needle-like crystalline pigment (B)) is not less than 1.0 and not more than 35.0. Therefore, also in the cooker top plate 1B, the adhesion and the scratch resistance of the heat-resistant resin layer 3B can be increased.

The details of the glass substrate 2, the silicone resin, the flaky pigment (A), the needle-like crystalline pigment (B), and the other components are as described in the first embodiment and, therefore, further description thereof will be omitted. Furthermore, the preferred forms of the heat-resistant resin layer 3B in this embodiment, including the respective preferred ranges of contents of the silicone resin, the flaky pigment (A), and the needle-like crystalline pigment (B) in each of the heat-resistant resin layer 3B and the layer (X), and the preferred range of mass ratios (content of flaky pigment (A) to content of needle-like crystalline pigment (B)) in the heat-resistant resin layer 3B, are the same as the preferred forms of the heat-resistant resin layer 3 and the layer (X) described in the first embodiment.

The inorganic light-shielding layer 7 is a light-shielding layer provided for the purpose of hiding the internal structure of the cooker. Therefore, by providing the inorganic light-shielding layer 7 together with the heat-resistant resin layer 3B, the internal structure of the cooker can be more effectively hidden when viewed from above the cooking surface 2a and the aesthetic appearance of the cooker top plate 1B can be further improved.

The type of the inorganic light-shielding layer 7 is not particularly limited so long as it is a layer containing inorganic matter and a layer having a low visible light transmittance. The inorganic light-shielding layer 7 is, for example, a layer containing a color pigment and a glass. In this case, for example, a Cu-Cr-Mn-based black inorganic pigment can be used as the color pigment. For example, a B₂O₃-SiO₂-based glass powder can be used as the glass. Alternatively, the inorganic light-shielding layer 7 may be a metallic layer made of titanium or other metals.

In this embodiment, the inorganic light-shielding layer 7 is a porous film containing a color pigment and a glass. Although it is desirable that the inorganic light-shielding layer 7 is a porous film as just described, the inorganic light-shielding layer 7 may be a dense film substantially free of voids. When the inorganic light-shielding layer 7 is a dense film, an adhesive is less likely to seep out to the glass substrate 2 and less likely to become noticeable as spots when viewed from above the cooking surface 2a.

The thickness of the inorganic light-shielding layer 7 is not particularly limited. The thickness of the inorganic light-shielding layer 7 can be appropriately selected according to, for example, the light transmittance, the mechanical strength or the coefficient of thermal expansion of the inorganic light-shielding layer 7. The inorganic light-shielding layer 7 normally has a coefficient of thermal expansion different from the glass substrate 2. Therefore, the inorganic light-shielding layer 7 may be damaged by repeated application of heating and cooling thereto.

From the viewpoint of further suppressing the above damage, the thickness of the inorganic light-shielding layer 7 is preferably small. The thickness of the inorganic light-shielding layer 7 is preferably not less than 1 µm, more preferably not less than 2 µm, preferably not more than 20 µm, and more preferably not more than 15 µm.

The method for producing the cooker top plate 1B is also not particularly limited and the cooker top plate 1B can be produced in the same method as in the first and second embodiments except for the formation of the inorganic light-shielding layer 7.

The manner of forming the inorganic light-shielding layer 7 is not particularly limited. The inorganic light-shielding layer 7 can be formed, for example, in the following manner.

First, a solvent is added to a mixed powder of a color pigment and a glass powder to form a paste. The obtained paste is applied to the back surface 2b of the glass substrate 2 by screen printing or other processes and then dried. Thereafter, the paste is fired and, thus, an inorganic light-shielding layer 7 can be formed. The firing temperature and the firing time can be appropriately selected according to the composition of the glass powder for use or other factors. The firing temperature may be, for example, about 200°C to about 900°C. The firing time may be, for example, about 10 minutes to about 1 hour.

When the inorganic light-shielding layer 7 is a metallic layer, the inorganic light-shielding layer 7 can be formed by a sputtering process, a CVD process or other processes.

Although in this embodiment a single-ply heat-resistant resin layer 3B is provided on the inorganic light-shielding layer 7, a heat-resistant resin layer having a two or more layer structure may be provided on the inorganic light-shielding layer 7.

### [Fourth Embodiment]

Fig. 4 is a schematic cross-sectional view showing a cooker top plate according to a fourth embodiment of the present invention.

A cooker top plate 1C shown in Fig. 4 includes a glass substrate 2 and a heat-resistant resin layer 3C. The cooker top plate 1C shown in Fig. 4 is different in the structure of the heat-resistant resin layer from the cooker top plate 1 shown in Fig. 1. Specifically, although in the cooker top plate 1 shown in Fig. 1 each of the layers (the first layer 4 and the second layer 5) constituting the heat-resistant resin layer 3 is a layer (X), the heat-resistant resin layer 3C in the cooker top plate 1C shown in Fig. 4 includes a layer (X) and a layer (Y).

The heat-resistant resin layer 3C is disposed on the back surface 2b of the glass substrate 2. The heat-resistant resin layer 3C has a two-layer structure. Specifically, the heat-resistant resin layer 3C includes a first layer 4C and a second layer 5C disposed on one surface of the first layer 4C located on the opposite side to the other surface thereof next to the glass substrate 2 side. The first layer 4C is a surface layer of the heat-resistant resin layer 3C located next to the glass substrate 2 side. The second layer 5C is a surface layer of the heat-resistant resin layer 3C located on a side thereof opposite to the glass substrate 2 side.

Each of the first layer 4C and the second layer 5C contains a silicone resin and a pigment. The first layer 4C is a layer (Y) . The second layer 5C is a layer (X) containing a flaky pigment (A) and a needle-like crystalline pigment (B). As the silicone resin, the flaky pigment (A), and the needle-like crystalline pigment (B), those described in the first embodiment can be appropriately used. Furthermore, the heat-resistant resin layer 3C may contain, like the first embodiment, a color pigment or so on. For example, by incorporating a color pigment into the first layer 4C, the number of variations of colors that can be given to the heat-resistant resin layer 3C can be increased.

Since, also in the cooker top plate 1C according to this embodiment, the heat-resistant resin layer 3C includes the specific layer (X), the scratch resistance and the adhesion of the heat-resistant resin layer 3C can be increased.

The details of the glass substrate 2, the silicone resin, the flaky pigment (A), the needle-like crystalline pigment (B), and the other components are as described in the first embodiment and, therefore, further description thereof will be omitted. Furthermore, the preferred forms of the heat-resistant resin layer 3C in this embodiment, including the respective preferred ranges of contents of the silicone resin, the flaky pigment (A), and the needle-like crystalline pigment (B) in each of the heat-resistant resin layer 3C, the layer (X), and the layer (Y) and the preferred range of mass ratios (content of flaky pigment (A) to content of needle-like crystalline pigment (B)) in the heat-resistant resin layer 3C, are the same as the preferred forms of the heat-resistant resin layer 3, the layer (X), and the layer (Y) described in the first embodiment.

### [Fifth Embodiment]

Fig. 5 is a schematic cross-sectional view showing a cooker top plate according to a fifth embodiment of the present invention.

A cooker top plate 1D shown in Fig. 5 includes a glass substrate 2 and a heat-resistant resin layer 3D. The cooker top plate 1D shown in Fig. 5 is different in the structure of the heat-resistant resin layer from the cooker top plate 1 shown in Fig. 1. Specifically, the cooker top plate 1 shown in Fig. 1 is provided with a heat-resistant resin layer 3 having a two-layer structure, whereas the cooker top plate 1D shown in Fig. 5 is provided with a heat-resistant resin layer 3D having a three-layer structure.

The heat-resistant resin layer 3D is disposed on the back surface 2b of the glass substrate 2. The heat-resistant resin layer 3D has a three-layer structure. Specifically, the heat-resistant resin layer 3D includes a first layer 4D, a second layer 5D disposed on one surface of the first layer 4D located on the opposite side to the other surface thereof next to the glass substrate 2 side, and a third layer 6D disposed on one surface of the second layer 5D on the opposite side to the other surface thereof next to the first surface 4D side. The first layer 4D is a surface layer of the heat-resistant resin layer 3D located next to the glass substrate 2 side. The third layer 6D is a surface layer of the heat-resistant resin layer 3D located on a side thereof opposite to the glass substrate 2 side.

Each of the first layer 4D, the second layer 5D, and the third layer 6D contains a silicone resin and a pigment. The second layer 5D is a layer (X) containing a flaky pigment (A) and a needle-like crystalline pigment (B). Each of the first layer 4D and the third layer 6D is a layer (Y).

Since, also in the cooker top plate 1D according to this embodiment, the heat-resistant resin layer 3D includes the specific layer (X), the scratch resistance and the adhesion of the heat-resistant resin layer 3D can be increased. Particularly in the cooker top plate 1D, the third layer 6D is provided on the surface of the second layer 5D which is the layer (X). Therefore, not only the effects of the scratch resistance and the adhesion of the heat-resistant resin layer 3D, which are derived from the second layer 5D, but also the effect of preventing the occurrence of spots, which is derived from the third layer 6D, can be exerted.

However, from the viewpoint of further increasing the scratch resistance of the heat-resistant resin layer 3D, the third layer 6D is preferably a layer (X).

The details of the glass substrate 2, the silicone resin, the flaky pigment (A), the needle-like crystalline pigment (B), and the other components are as described in the first embodiment and, therefore, further description thereof will be omitted. Furthermore, the preferred forms of the heat-resistant resin layer 3D in this embodiment, including the respective preferred ranges of contents of the silicone resin, the flaky pigment (A), and the needle-like crystalline pigment (B) in each of the heat-resistant resin layer 3D, the layer (X), and the layer (Y) and the preferred range of mass ratios (content of flaky pigment (A) to content of needle-like crystalline pigment (B)) in the heat-resistant resin layer 3D, are the same as the preferred forms of the heat-resistant resin layer 3, the layer (X), and the layer (Y) described in the first embodiment.

The thickness of the third layer 6D is preferably not less than 5 µm, more preferably not less than 8 µm, preferably not more than 50 µm, and more preferably not more than 30 µm. When the above thickness is within the above range, delamination of the heat-resistant resin layer 3D due to heating and cooling repeatedly applied thereto can be more effectively prevented and the effect of preventing the occurrence of spots can be further increased.

As described so far, the heat-resistant resin layer in the present invention may have a single-layer structure, a two-layer structure, an over two-layer structure, a three-layer structure or an over three-layer structure. In the present invention, when the heat-resistant resin layer has a single-layer structure, the heat-resistant resin layer is a layer (X). In the present invention, when the heat-resistant resin layer has a two or more layer structure, at least one of layers constituting the heat-resistant resin layer is a layer (X). When the heat-resistant resin layer has a two or more layer structure, the number of layers (X) included in the heat-resistant resin layer may be one or may be two or more or all the layers constituting the heat-resistant resin layer may be layers (X) . In the present invention, when the heat-resistant resin layer has a two or more layer structure, the heat-resistant resin layer may include a layer (X) and a layer (Y).

From the viewpoint of more effectively exerting the effects of the invention, in the case where the heat-resistant resin layer has a two or more layer structure, the surface layer of the heat-resistant resin layer located on a side thereof opposite to the glass substrate side is preferably a layer (X) and, more preferably, all the layers of the heat-resistant resin layer are layers (X). From the viewpoint of increasing the number of variations of colors for the heat-resistant resin layer, in the case where the heat-resistant resin layer has a two or more layer structure, the surface layer of the heat-resistant resin layer next to the glass substrate side preferably contains a color pigment. In this case, the surface layer of the heat-resistant resin layer next to the glass substrate side may be a layer (X) or a layer (Y). From the viewpoint of more effectively exerting the effects of the invention and increasing the number of variations of colors that can be given to the heat-resistant resin layer, it is preferred that the surface layer of the heat-resistant resin layer located on a side thereof opposite to the glass substrate side is a layer (X) and the surface layer of the heat-resistant resin layer next to the glass substrate side is a layer (Y).

Hereinafter, a description will be given in further detail of the present invention with reference to examples. However, the following examples are merely illustrative. The present invention is not at all limited by the following examples .

A glass substrate below was prepared.

A clear crystallized glass plate ("N-0" manufactured by Nippon Electric Glass Co., Ltd., average coefficient of linear thermal expansion at 30°C to 750°C: 0.5 × 10⁻⁷/°C, thickness: 4 mm)

Materials for a heat-resistant resin layer described below were prepared.

### <Silicone Resin Component>

Methyl phenyl silicone resin ("TSR-145" manufactured by Momentive Performance Materials Inc., 40% by mass solvent (xylene and toluene) contained in the marketed product)
Multifunctional silicone oligomer

### <Flaky Pigment (A)>

Aluminum flakes (Mohs hardness: 2.8, metallic pigment)
Mica (Mohs hardness: 2.8, extender pigment)

### <Needle-like Crystalline Pigment (B)>

Potassium titanate (Mohs hardness: 4, "TISMO D" manufactured by Otsuka Chemical Co., Ltd.)

### <Other Materials>

Black pigment (spherical pigment)
Reddish brown pigment (spherical pigment)
Talc (Mohs hardness: 1, flaky pigment)

### <Solvent>

### Xylene

In Examples 1 to 5 and Comparative Examples 1 to 6, a cooker top plate including a heat-resistant resin layer having a single-layer structure was produced in the following manner.

The shape, type, and content of pigment in the heat-resistant resin layer can be confirmed using known methods. For example, the shape of pigment in the heat-resistant resin layer can be confirmed by cutting the top plate, polishing the cut surface, and then observing the polished cut surface of the heat-resistant resin layer with a scanning electron microscope (such as JSM-IT700HR) at approximately 200-fold to 3000-fold magnification. For example, the type of pigment in the heat-resistant resin layer can be determined, after the above observation of the shape of pigment with the scanning electron microscope, by performing qualitative elemental analysis of a region where the pigment is present and estimation from the constituent elements. For example, the content of each pigment in the heat-resistant resin layer can be determined by performing quantitative analysis simultaneously with the above qualitative elemental analysis.

### (Example 1)

A methyl phenyl silicone resin (TSR-145), a multifunctional silicone oligomer, aluminum flakes, mica, potassium titanate, and xylene were mixed together to prepare s paste. The respective contents of components per 100% by mass of the obtained paste exclusive of the solvent are shown in Table 1 (wherein the content of methyl phenyl silicone resin is the content of the marketed product thereof) . The term solvent used herein is a general term referring to any substance having the property of dissolving or diluting other components and less remaining in a coating after being dried. Examples of an organic solvent include second-class organic solvents listed in Order for Enforcement of Industrial Safety and Health Act, Appended Table 6-2.

The obtained paste was screen-printed on a surface of a glass substrate to have a thickness of coating of 15 µm. Subsequently, the paste was dried by the application of heat under conditions of 300°C for 10 minutes. In this manner, a cooker top plate was obtained in which a heat-resistant resin layer having a single-layer structure was disposed on the surface of the glass substrate.

### (Examples 2 to 5 and Comparative Examples 1 to 6)

A cooker top plate was produced in the same manner as in Example 1 except that the composition of components per 100% by mass of paste exclusive of solvent was changed as shown in Tables 1 and 2.

In Examples 6 to 11 and Comparative Example 7, a cooker top plate including a heat-resistant resin layer having a two or more layer structure was produced in the following manner.

### Preparation of Pastes BK-1, BK-2, BK-3, SI-1, and RB-1:

Each of pastes BK-1, BK-2, BK-3, SI-1, and RB-1 was prepared by mixing the components shown in Table 3 below. The respective contents of components per 100% by mass of each paste exclusive of solvent are shown in Table 3 (wherein, in Table 3, the content of methyl phenyl silicone resin is the content of the marketed product thereof).

### (Example 6)

A paste BK-1 was used as a paste for forming a first layer in a heat-resistant resin layer and a paste SI-1 was used as a paste for forming a second layer in the heat-resistant resin layer. The paste for forming a first layer was screen-printed on a surface of a glass substrate to have a thickness of coating of 15 µm . Subsequently, the paste was dried by the application of heat under conditions of 300°C for 10 minutes, thus forming a first layer. Subsequently, the paste for forming a second layer was screen-printed on a surface of the first layer to have a thickness of coating of 15 µm. Subsequently, the paste was dried by the application of heat under conditions of 300°C for 10 minutes, thus forming a second layer. In this manner, a cooker top plate with a heat-resistant resin layer of a two-layer structure provided on the surface of the glass substrate was produced.

### (Examples 7 to 10 and Comparative Example 7)

A cooker top plate was produced in the same manner as in Example 6 except that the type of paste was changed as shown in Table 4.

### (Example 11)

A paste BK-1 was used as a paste for forming a first layer in a heat-resistant resin layer, a paste SI-1 was used as a paste for forming a second layer in the heat-resistant resin layer, and a paste BK-1 was used as a paste for forming a third layer in the heat-resistant resin layer. The paste for forming a first layer was screen-printed on a surface of a glass substrate to have a thickness of coating of 15 µm. Subsequently, the paste was dried by the application of heat under conditions of 300°C for 10 minutes, thus forming a first layer. Subsequently, the paste for forming a second layer was screen-printed on a surface of the first layer to have a thickness of coating of 15 µm. Subsequently, the paste was dried by the application of heat under conditions of 300°C for 10 minutes, thus forming a second layer. Subsequently, the paste for forming a third layer was screen-printed on a surface of the second layer to have a thickness of coating of 15 µm . Subsequently, the paste was dried by the application of heat under conditions of 300°C for 10 minutes, thus forming a third layer. In this manner, a cooker top plate with a heat-resistant resin layer of a three-layer structure provided on the surface of the glass substrate was produced.

### [Evaluations]

### (1) Appearance Color of Cooker Top Plate

Each of the cooker top plates was checked in terms of appearance color when viewed from above the glass substrate.

### (2) Scratch Resistance of Heat-Resistant Resin Layer (Pencil Hardness)

Each of the obtained cooker top plates was evaluated in terms of pencil hardness of its heat-resistant resin layer in conformity with JIS K 5600-5-4 (1999).

### (3) Scratch Resistance of Heat-Resistant Resin Layer (Hardness at Which No Scratch Visible through Glass Substrate Occurs)

Each of the obtained cooker top plates was evaluated in terms of pencil hardness of its heat-resistant resin layer in conformity with JIS K 5600-5-4 (1999) and then viewed through the glass substrate. In doing so, whether or not any scratch on the heat-resistant resin layer was visible through the glass substrate was checked. When any scratch was not visible, it was checked whether or not any scratch formed on the same heat-resistant resin layer using a pencil having a higher hardness for the test was visible through the glass substrate. Among hardnesses at which any scratch on the heat-resistant resin layer was not visible, the maximum hardness was considered as a "hardness at which no scratch visible through glass substrate occurs".

### (4) Adhesion of Heat-Resistant Resin Layer (Boiling Water Resistance Test)

Each of the obtained cooker top plates was immersed into 95°C boiling water for two hours. After the immersion, 11 longitudinal and 11 transverse incisions were made 1 mm apart in the heat-resistant resin layer with a cutter knife. A tape was applied to the surface of the heat-resistant resin layer having a grid of 100 cells defined by the incisions. After the tape was peeled off from the surface, how the heat-resistant resin layer was delaminated was checked.

### [Evaluation Criteria]

O: The heat-resistant resin layer was not delaminated from the glass substrate.
△: The heat-resistant resin layer was not delaminated from the glass substrate, but the surface of the heat-resistant resin layer was found to partially peel off.
×: The heat-resistant resin layer was delaminated from the glass substrate and the surface of the glass substrate was found to be exposed.

The details and results are shown Tables 1 to 4 below.

**[Table 1]**

| | | | Example 1 | Example 2 | Example 3 | Example 4 | Example 5 |
|---|---|---|---|---|---|---|---|
| Number of Layers in Heat-Resistant Resin Layer | | - | 1 | 1 | 1 | 1 | 1 |
| | Methyl phenyl silicone resin (TSR-145) | % by mass | 40 | 40 | 40 | 40 | 40 |
| | Multifunctional silicone oligomer | % by mass | 4 | 4 | 4 | 4 | 4 |
| | Black pigment (spherical pigment) | % by mass | | | | 5 | 5 |
| Flaky pigment (A) | Aluminum flakes (Mohs hardness: 2.8, metallic pigment) | % by mass | 23 | 23 | 23 | 10 | 37.8 |
| | Mica (Mohs hardness: 2.8, extender pigment) | % by mass | 16.5 | 31.35 | 30.2 | 33 | |
| Needle-like crystalline pigment (B) | Potassium titanate (Mohs hardness: 4) | % by mass | 16.5 | 1.65 | 2.8 | 8 | 13.2 |
| | Talc (Mohs hardness: 1, flaky pigment) | % by mass | | | | | |
| Total | | % by mass | 100 | 100 | 100 | 100 | 100 |
| Heat-Resistant Resin Layer (Layer (X)) | Total Content of Flaky Pigment (A) and Needle-like Crystalline Pigment (B) Per 100% by Mass of Pigment | % by mass | 100.0 | 100.0 | 100.0 | 91.1 | 91.1 |
| | Mass Ratio (Content of Flaky Pigment (A))/(Content of Needle-like Crystalline Pigment (B)) | - | 2.4 | 32.9 | 19.0 | 5.4 | 2.9 |
| Appearance Color of Cooker Top Plate | | | silver | silver | silver | black metallic | black metallic |
| Scratch Resistance of Heat-Resistant Resin Layer | Pencil Hardness | | 7H | 7H | 7H | 7H | 7H |
| | Hardness at Which No Scratch Visible through Glass Substrate Occurs | | 7H | 7H | 7H | 7H | 7H |
| Adhesion of Heat-Resistant Resin Layer (Boiling Water Resistance Test (95°C for 2 hours)) | | | ○ | ○ | ○ | ○ | ○ |

**[Table 2]**

| | | | Comp. Ex. 1 | Comp. Ex. 2 | Comp. Ex 3 | Comp. Ex. 4 | Comp. Ex. 5 | Comp. Ex. 6 |
|---|---|---|---|---|---|---|---|---|
| Number of Layers in Heat-Resistant Resin Layer | | - | 1 | 1 | 1 | 1 | 1 | 1 |
| | Methyl phenyl silicone resin (TSR-145) | % by mass | 40 | 40 | 40 | 40 | 40 | 44 |
| | Multifunctional silicone oligomer | % by mass | 4 | 4 | 4 | 4 | 4 | 4 |
| | Black pigment (spherical pigment) | % by mass | | | | | 18 | 27 |
| Flaky pigment (A) | Aluminum flakes (Mohs hardness: 2.8, metallic pigment) | % by mass | 23 | 23 | 23 | 23 | 5 | |
| | Mica (Mohs hardness: 2.8, extender pigment) | % by mass | 33 | | | | 23 | 19 |
| Needle-like crystalline pigment (B) | Potassium titanate (Mohs hardness: 4) | % by mass | | 33 | | 23 | 10 | 6 |
| | Talc (Mohs hardness: 1, flaky pigment) | % by mass | | | 33 | 10 | | |
| Total | | % by mass | 100 | 100 | 100 | 100 | 100 | 100 |
| Heat-Resistant Resin Layer (Layer (Y)) | Total Content of Flaky Pigment (A) and Needle-like Crystalline Pigment (B) Per 100% by Mass of Pigment | % by mass | 100.0 | 100.0 | 41.1 | 82.1 | 67.9 | 48.1 |
| | Mass Ratio (Content of Flaky Pigment (A))/(Content of Needle-like Crystalline Pigment (B)) | - | - | 0.7 | - | 1.0 | 2.8 | 3.2 |
| Appearance Color of Cooker Top Plate | | | silver | silver | silver | silver | black metallic | black |
| Scratch Resistance of Heat-Resistant Resin Layer | Pencil Hardness | | 7H | 6H | H | 4H | 5H | 5H |
| | Hardness at Which No Scratch Visible through Glass Substrate Occurs | | 7H | 6H | H | 4H | 5H | 5H |
| Adhesion of Heat-Resistant Resin Layer (Boiling Water Resistance Test (95°C for 2 hours)) | | | Δ | ○ | ○ | ○ | ○ | ○ |

**[Table 3]**

| Type of Paste | | | BK-1 | BK-2 | BK-3 | SI-1 | RB-1 |
|---|---|---|---|---|---|---|---|
| | Methyl phenyl silicone resin (TSR-145) | % by mass | 40 | 40 | 40 | 40 | 40 |
| | Multifunctional silicone oligomer | % by mass | 4 | 4 | 4 | 4 | 4 |
| | Black pigment (spherical pigment) | % by mass | 29 | 29 | 29 | | |
| | Reddish brown pigment (spherical pigment) | % by mass | mass | | | | 29 |
| Flaky pigment (A) | Aluminum flakes (Mohs hardness: 2.8. metallic pigment) | % by mass | | | | 23 | |
| | Mica (Mohs hardness: 2.8, extender pigment) | % by mass | 21 | 27 | | 30 | 21 |
| Needle-like crystalline pigment (B) | Potassium titanate (Mohs hardness: 4) | % by mass | 6 | | 27 | 3 | 6 |
| | Talc (Mohs hardness: 1, flaky pigment) | % by mass | | | | | |
| Total | | % by mass | 100 | 100 | 100 | 100 | 100 |
| Total Content of Flaky Pigment (A) and Needle-like Crystalline Pigment (B) Per 100% by Mass of Pigment | | % by mass | 48.2 | 48.2 | 48.2 | 100.0 | 48.2 |
| Mass Ratio (Content of Flaky Pigment (A))/(Content of Needle-like Crystalline Pigment (B)) | | - | 3.5 | - | 0.0 | 17.7 | 3.5 |

**[Table 4]**

| | | Example 6 | Example 7 | Example 8 | Example 9 | Example 10 | Comp. Ex. 7 | Example 11 |
|---|---|---|---|---|---|---|---|---|
| Number of Layers in Heat-Resistant Resin Layer | | 2 | 2 | 2 | 2 | 2 | 2 | 3 |
| First Layer | Type of Paste | BK-1 | BK-3 | SI-1 | BK-2 | RB-1 | BK-1 | BK-1 |
| | Type of Layer | Layer (Y) | Layer (Y) | Layer (X) | Layer (Y) | Layer (Y) | Layer (Y) | Layer (Y) |
| Second Layer | Type of Paste | SI-1 | SI-1 | SI-1 | SI-1 | SI-1 | BK-1 | SI-1 |
| | Type of Layer | Layer (X) | Layer (X) | Layer (X) | Layer (X) | Layer (X) | Layer (Y) | Layer (X) |
| Third Layer | Type of Paste | - | - | - | - | - | - | BK-1 |
| | Type of Layer | - | - | - | - | - | - | Layer (Y) |
| Appearance Color of Cooker Top Plate | | black | black | silver | black | reddish brown | black | black |
| Scratch Resistance of Heat-Resistant Resin Layer | Pencil Hardness | 7H | 7H | 7H | 7H | 7H | 5H | 5H |
| | Hardness at Which No Scratch Visible through Glass Substrate Occurs | 7H | 7H | 7H | 7H | 7H | 5H | 7H |
| Adhesion of Heat-Resistant Resin Layer (Boiling Water Resistance Test (95°C for 2 hours)) | | ○ | ○ | ○ | ○ | ○ | ○ | ○ |

### [Reference Signs List]

1, 1A, 1B, 1C, 1D ... cooker top plate
2 ... glass substrate
2a ... cooking surface
2b ... back surface
3, 3A, 3B, 3C, 3D ... heat-resistant resin layer
4, 4C, 4D ... first layer
5, 5C, 5D ... second layer
6D ... third layer
7 ... inorganic light-shielding layer

## Claims

1. A cooker top plate comprising:
a glass substrate having a cooking surface on which a cooking utensil is to be put and a back surface on an opposite side to the cooking surface; and
a heat-resistant resin layer disposed on the back surface of the glass substrate,
wherein the heat-resistant resin layer comprises a layer (X) containing a silicone resin and a pigment,
the pigment in the layer (X) contains a flaky pigment (A) having a Mohs hardness of 2.5 or more and a needle-like crystalline pigment (B) having a Mohs hardness of 2.5 or more,
a total content of the flaky pigment (A) and the needle-like crystalline pigment (B) per 100% by mass of pigment in the layer (X) is 85% by mass or more, and
a mass ratio of the content of the flaky pigment (A) to the content of the needle-like crystalline pigment (B) in the layer (X) (content of flaky pigment (A) to content of needle-like crystalline pigment (B)) is not less than 1.0 and not more than 35.0.

2. The cooker top plate according to claim 1, wherein the flaky pigment (A) in the layer (X) contains at least one of a metallic pigment (A1) and an extender pigment (A2) different from the metallic pigment.

3. The cooker top plate according to claim 2, wherein the metallic pigment (A1) in the layer (X) contains at least one of aluminum and an aluminum compound.

4. The cooker top plate according to claim 2 or 3, wherein a content of the metallic pigment (A1) per 100% by mass of the layer (X) is not less than 10% by mass and not more than 55% by mass.

5. The cooker top plate according to claim 2 or 3, wherein the extender pigment (A2) in the layer (X) contains mica.

6. The cooker top plate according to any one of claims 1 to 3, wherein the needle-like crystalline pigment (B) in the layer (X) contains at least one selected from the group consisting of potassium titanate, calcium silicate, and titanium oxide.

7. The cooker top plate according to any one of claims 1 to 3, wherein the needle-like crystalline pigment (B) in the layer (X) contains potassium titanate.

8. The cooker top plate according to any one of claims 1 to 3, wherein the heat-resistant resin layer has a single-layer structure formed only of the layer (X).

9. The cooker top plate according to any one of claims 1 to 3, wherein the heat-resistant resin layer has a structure formed of two or more layers.

10. The cooker top plate according to claim 9, wherein a surface layer of the heat-resistant resin layer located on a side thereof opposite to the glass substrate side is the layer (X).
